# EUROPÄISCHE PATENTANMELDUNG

(11) **EP 3 382 670 A1**
(43) Veröffentlichungstag der Anmeldung: **03.10.2018**
(21) Anmeldenummer: 18163836.2
(22) Anmeldetag: 26.03.2018
(51) Int. Cl.: G08G 1/16, G01S 15/93, G01S 17/93, G01S 13/93, G06K 9/00

(54) **BESTIMMUNG EINES BEWEGUNGSTRENDS VON OBJEKTEN**

(30) Priorität: 30.03.2017 DE 102017106847
(71) Anmelder: Valeo Schalter und Sensoren GmbH, 74321 Bietigheim-Bissingen (DE)
(72) Erfinder: Abraham, Anoop, 74321 Bietigheim-Bissingen (DE); Kossmann, Simon, 74321 Bietigheim-Bissingen (DE)

(57) **Zusammenfassung**

Die Erfindung betrifft ein Verfahren zur Bestimmung eines Bewegungstrends von Objekten mit einem Umgebungssensor (16) in einem Winkelbereich, umfassend folgende Schritte Erfassen von Warnelementen (22, 24) mit dem Umgebungssensor (16) in dem Winkelbereich, Unterteilen des Winkelbereichs in eine Mehrzahl Sektoren (26), Erfassen eines Bewegungstrends für jedes erfasste Warnelement (22, 24), Bestimmen eines Bewegungstrends für jeden Sektor (26) basierend auf dem Bewegungstrend der erfassten Warnelemente (22, 24) in dem Sektor (26), und Bestimmen eines Bewegungstrends eines Objekts basierend auf der Position des Objekts in einem der Sektoren (26). Die Erfindung betrifft auch ein Verfahren zur Ausgabe einer Warnung bei einer Annäherung an wenigstens ein Objekt, umfassend die Schritte Bestimmung eines Bewegungstrends von Objekten nach dem obigen Verfahren, und Ausgeben einer Warnung abhängig von einem Abstand des Objekts und dem Bewegungstrend in dem entsprechenden Sektor (26). Die Erfindung betrifft ebenfalls ein Fahrassistenzsystem (12) für ein Fahrzeug (10) mit einer Steuerungseinheit (14) und einem Umgebungssensor (16), wobei das Fahrassistenzsystem (12) ausgeführt ist, das obige Verfahren durchzuführen. Die Erfindung betrifft weiterhin ein Fahrzeug (10) mit einem obigen Fahrassistenzsystem (12).

## Beschreibung

Die vorliegende Erfindung betrifft ein Verfahren zur Bestimmung eines Bewegungstrends von Objekten mit einem Umgebungssensor in einem Winkelbereich, umfassend ein Erfassen von Warnelementen mit dem Umgebungssensor in dem Winkelbereich.

Zusätzlich betrifft die vorliegende Erfindung ein Verfahren zur Ausgabe einer Warnung bei einer Annäherung an wenigstens ein Objekt.

Auch betrifft die vorliegende Erfindung ein Fahrassistenzsystem für ein Fahrzeug mit einer Steuerungseinheit und einem Umgebungssensor, wobei das Fahrassistenzsystem ausgeführt ist, das obige Verfahren durchzuführen.

Des Weiteren betrifft die vorliegende Erfindung ein Fahrzeug mit einem solchen Fahrassistenzsystem.

In Fahrassistenzsystemen werden Umgebungssensoren verwendet, um eine Umgebung eines Fahrzeugs zu erfassen. Darauf basierend kann eine Annäherung von Objekten erfasst werden. Bei Parkassistenzsystemen kann basierend darauf eine Warnung ausgegeben werden, um einen Fahrzeugführer vor einer bevorstehenden Kollision mit dem Objekt zu warnen.

Dazu werden basierend auf Sensorinformationen der Umgebungssensoren Warnelemente identifiziert, für die ein Bewegungstrend bestimmt wird. Dadurch kann erfasst werden, ob ein Warnelement zu einem Objekt gehört, das sich entfernt, das sich in einem konstanten Abstand befindet, oder das sich annähert. Der Trend kann beispielsweise als Annähernd, Konstant nach Annähernd, Entfernend oder Konstant nach Entfernend bestimmt werden.

Davon ausgehend kann beispielsweise bei dem Parkassistenzsystem eine Warnung nur dann ausgegeben werden, wenn das Warnelement als Bewegungstrend Annähernd oder Konstant nach Annähernd aufweist, d.h. wenn sich das Fahrzeug und ein durch das Warnelement definiertes Hindernis annähern.

Der Bewegungstrend wird im Stand der Technik üblicherweise für jedes Warnelement individuell bestimmt. Dies ist insofern problematisch, da das Erfassen der Warnelemente mit dem Umgebungssensor stets fehlerbehaftet ist, so dass ein Warnelement nicht kontinuierlich erfasst werden kann. Diesen Warnelementen fehlt somit bei erneuter Erfassung eine vorherige Position, so dass für diese Warnelemente keine Bewegung bestimmt werden kann, weder in Richtung noch in Geschwindigkeit. Daher muss bei wieder erfassten Warnelementen, genauso wie bei erstmals neu erfassten Warnelementen unabhängig von dessen Bewegung vorsichtshalber bei Parkassistenzsystemen oder anderen Fahrzeugassistenzsystemen eine Warnung ausgegeben werden, auch wenn dies bei Kenntnis der Bewegung des Warnelements nicht erforderlich wäre. Beispielsweise kann es bei der Verwendung von Ultraschallsensoren als Umgebungssensoren vorkommen, dass ein Warnelement nur von einem Sensor erfasst wird, so dass keine Triangulation zur Bestimmung einer Entfernung des Warnelements erfolgen kann.

Bei der Nachverfolgung von Warnelementen ist es außerdem erforderlich, jedes aktuell erfasste Warnelement mit einem zuvor erfassten Warnelement zu assoziieren, um eine Bewegung des Warnelements erfassen zu können. Dies wird häufig realisiert, indem ein Nachverfolgungsfeld um ein erfasstes Warnelement definiert wird. Eine derartige Nachverfolgung von Warnelementen ist problematisch, weil ein Warnelement bei hinreichend schneller Bewegung das Nachverfolgungsfeld verlassen kann, und dann als neues Warnelement erfasst wird. Eine Assoziierung mit dem zuvor erfassten Warnelement ist dann nicht mehr gegeben. Eine Vergrößerung des Nachverfolgungsfelds ist nur in geringen Grenzen möglich, um Anforderungen an Rechenleistung für die Durchführung des Verfahrens zu begrenzen. Im Ergebnis muss also bei solchen, sich schnell bewegenden Warnelementen, beispielsweise bei Parkassistenzsystemen oder anderen Fahrzeugassistenzsystemen, vorsichtshalber eine Warnung ausgegeben werden, wenn das Warnelement das Nachverfolgungsfeld verlässt und nicht mehr nachverfolgt werden kann. Dies gilt selbst dann, wenn das Parkassistenzsystem konfiguriert ist, eine Warnung nur bei sich nähernden Warnelementen auszugeben.

In diesem Zusammenhang ist beispielsweise aus der US 2014/0203925 A1 ein Verfahren zur rechnergestützten Verarbeitung des Nahfeldes eines Fahrzeugs bekannt.

Bei dem Verfahren werden durch eine Sensorik das Umfeld des Fahrzeugs erfasst und Umfelddaten bereitgestellt. Durch eine Recheneinheit werden die von der Sensorik bereitgestellten Umfelddaten verarbeitet, indem für vorgegebene Umfangsabschnitte des Fahrzeugs ein jeweiliger Abstand zu Objekten ermittelt wird, welche im Umfeld des Fahrzeugs durch die Sensorik erfasst werden bzw. wurden. In Abhängigkeit einer unter Verarbeitung von odometrischen Daten prognostizierten und/oder tatsächlichen Bewegung des Fahrzeugs wird für zumindest einen der vorgegebenen Umfangsabschnitte eine Kollisionswahrscheinlichkeit zwischen einem der ermittelten Objekte und dem Fahrzeug ermittelt. Schließlich wird auf einer Ausgabeeinheit das Umfeld des Fahrzeugs dargestellt, indem für zumindest einen der vorgegebenen Umfangsabschnitte eine Abstandsinformation zwischen diesem Umfangsabschnitt und einem oder mehreren der Objekte durch ein graphisches und/oder akustisches Element ausgegeben wird, wobei das Element zugleich eine Kollisionsinformation über die auf dieses Objekt bezogene Kollisionswahrscheinlichkeit umfasst.

Weiterhin ist aus der WO 2016/026 922 A1 ein Verfahren zum Warnen eines Fahrers eines Kraftfahrzeugs vor der Anwesenheit eines Objekts in einer Umgebung des Kraftfahrzeugs mittels eines Fahrerassistenzsystems bekannt. Bei dem Verfahren wird eine Position des Objekts mittels einer Sensoreinrichtung ermittelt. Weiter wird ein voraussichtlicher Fahrschlauch des Kraftfahrzeugs ermittelt. Anhand der ermittelten Position des Objekts und des ermittelten Fahrschlauchs wird ein Kollisionsabstand, welcher einen Abstand zwischen dem Kraftfahrzeug und dem Objekt beim Bewegen des Kraftfahrzeugs innerhalb des ermittelten Fahrschlauchs beschreibt, ermittelt. Ein Mindestabstand zwischen dem Kraftfahrzeug und dem Objekt wird ermittelt und ein Warnsignal wird ausgegeben, falls der Wert für den Mindestabstand einen vorbestimmten Grenzwert unterschreitet. Der ermittelte Wert für den Mindestabstand wird in Abhängigkeit von dem ermittelten Kollisionsabstand angepasst.

Ausgehend von dem oben genannten Stand der Technik liegt der Erfindung somit die Aufgabe zugrunde, ein Verfahren der oben genannten Art, ein Fahrassistenzsystem der oben genannten Art und ein Fahrzeug der oben genannten Art anzugeben, die eine verbesserte Nachverfolgung von Objekten ermöglichen und eine zuverlässige Erfassung von sich annähernden Objekten gewährleisten.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zur Bestimmung eines Bewegungstrends von Objekten mit einem Umgebungssensor in einem Winkelbereich angegeben, umfassend die Schritte Erfassen von Warnelementen mit dem Umgebungssensor in dem Winkelbereich, Unterteilen des Winkelbereichs in eine Mehrzahl Sektoren, Erfassen eines Bewegungstrends für jedes erfasste Warnelement, Bestimmen eines Bewegungstrends für jeden Sektor basierend auf dem Bewegungstrend der erfassten Warnelemente in dem Sektor, und Bestimmen eines Bewegungstrends eines Objekts basierend auf der Position des Objekts in einem der Sektoren.

Erfindungsgemäß ist auch ein Verfahren zur Ausgabe einer Warnung bei einer Annäherung an wenigstens ein Objekt angegeben, mit den Schritten Bestimmung eines Bewegungstrends von Objekten nach dem obigen Verfahren, und Ausgeben einer Warnung abhängig von einem Abstand des Objekts und dem Bewegungstrend in dem entsprechenden Sektor.

Erfindungsgemäß ist außerdem ein Fahrassistenzsystem für ein Fahrzeug angegeben mit einer Steuerungseinheit und einem Umgebungssensor, wobei das Fahrassistenzsystem ausgeführt ist, das obige Verfahren durchzuführen.

Weiter ist erfindungsgemäß ein Fahrzeug mit einem solchen Fahrassistenzsystem angegeben.

Grundidee der vorliegenden Erfindung ist es also, einen Bewegungstrend von Objekten basierend auf einem Bewegungstrend eines Sektors, in dem sich das jeweilige Objekt befindet, zu bestimmen. Der Bewegungstrend wird dabei für jeden Sektor bestimmt, indem der Bewegungstrend insgesamt basierend auf dem Bewegungstrend von in dem Sektor befindlichen Warnelementen bestimmt wird. Es kann somit beispielsweise eine Mittelwertbildung erfolgen. Auch andere Verfahren zur Bestimmung eines Wertes beispielsweise aus einer Mehrzahl Einzelwerte, beispielsweise mit einer Gewichtung, mit einer Schwellwertbildung oder ähnlichem, sind in der Technik prinzipiell bekannt. Durch die Bestimmung des Bewegungstrends für jeweils einen Sektor als Ganzem können Schwankungen bei der Bestimmung von Bewegungstrends einfach ausgeglichen werden, so dass der Bewegungstrend für das Objekt abhängig von dem Sektor zuverlässig bestimmt werden kann.

Damit kann beispielsweise für ein Fahrassistenzsystem auf einfach Weise eine Annäherung an ein Objekt erfasst werden, so dass eine entsprechende Warnung mit einer hohen Zuverlässigkeit ausgegeben werden kann. Diese Warnung kann eine interne Warnung in dem Fahrassistenzsystem zur weiteren Verarbeitung sein, oder eine externe Warnung an einen Fahrzeugführer. Bei einem Parkassistenzsystem kann somit beispielsweise ausgehend von einem nächsten Warnelement in einem Sektor, d.h. einen Warnelement, das den geringsten Abstand zu dem Fahrzeug aufweist

Ein Warnelement stell eine Erkennung eines Objekts dar, wobei das Warnelement einen Abstand von dem Umgebungssensor aufweist. Ein gegenständliches Objekt kann dabei zur Erfassung einer Mehrzahl Warnelemente führen, auch in verschiedenen Sektoren.

Der Bewegungstrend kann auf verschiedene Weisen dargestellt werden. Prinzipiell kann der Bewegungstrend als eine Kombination aus Bewegungsrichtung und Bewegungsgeschwindigkeit dargestellt werden. Alternativ oder zusätzlich kann der Bewegungstrend eine einfache Klassifizierung aufweisen, beispielsweise Annähernd, Konstant nach Annähernd, Entfernend oder Konstant nach Entfernend. Diese Information kann für jeden Sektor ausreichend sein um zu bestimmen, ob beispielsweise eine Warnung von dem Fahrassistenzsystem ausgegeben werden muss. Dieser Bewegungstrend kann sowohl für ein einzelnes Warnelement wie auch für den Sektor entsprechend dargestellt werden.

Als Umgebungssensor sind prinzipiell verschiedene Sensoren bekannt. Dabei kann der Umgebungssensor durch eine Mehrzahl Einzelsensoren gebildet werden. Die Einzelsensoren sind vorzugsweise so an dem Fahrzeug angeordnet, dass sie eine unmittelbare Umgebung des Fahrzeugs vollständig umfassen. Der Umgebungssensor weist also im Wesentlichen einen Winkelbereich von 360°auf.

Jeder Sektor umfasst einen Teil des Winkelbereichs des Umgebungssensors. Die Sektoren können beispielsweise einen jeweils gleichen Teil des Winkelbereichs abdecken. Prinzipiell können die Sektoren aber frei gebildet werden, um beispielsweise bestimmte Bereiche des Winkelbereichs mit einer höheren Genauigkeit erfassen zu können als andere Bereiche.

Einzelne Verfahrensschritte können offensichtlich in beliebiger Reihenfolge durchgeführt werden. Beispielsweise kann der Schritt des Unterteilens des Winkelbereichs in eine Mehrzahl Sektoren prinzipiell als erster Schritt durchgeführt werden.

In vorteilhafter Ausgestaltung der Erfindung weist der Umgebungssensor wenigstens einen Ultraschallsensor, ein Lidar, einen Laserscanner, ein Radar, oder eine Kamera auf. Abhängig von der Art des Umgebungssensors kann dabei ein Abstand von Objekten unmittelbar von dem Umgebungssensor erfasst werden. Alternativ kann der Abstand beispielsweise durch eine entsprechende Bestimmung beispielsweise im Rahmen einer Bildverarbeitung eines optischen Sensors erfolgen.

In vorteilhafter Ausgestaltung der Erfindung umfasst der Schritt des Erfassens von Warnelementen mit dem Umgebungssensor ein Erkennen von Erkennungselementen mit dem Umgebungssensor in dem Winkelbereich und ein Herausfiltern der Warnelemente aus den Erkennungselementen. Durch das Filtern können Warnelemente, die beispielsweise nur unvollständig erfasst wurden, von der Bestimmung des Bewegungstrends ausgeschlossen werden. Beispielsweise kann so verhindert werden, dass der Bewegungstrend basierend auf Warnelementen bestimmt wird, die gerade erst erstmals erfasst wurden, indem diese Warnelemente aus den im Weiteren betrachteten Warnelementen herausgefiltert werden. Dies verbessert die Bestimmung des Bewegungstrends und liefert ein stabiles Ergebnis für den Bewegungstrend. Dabei wird vorzugsweise eine Hysteresefunktion angewendet, um sicherzustellen, dass Warnelemente stabil erfasst werden für die weitere Verarbeitung. Dies verhindert ein wiederholtes Initialisieren von wiederholt neu erfassten Warnelementen.

In vorteilhafter Ausgestaltung der Erfindung umfasst der Schritt des Erfassens eines Bewegungstrends für jedes Warnelement ein Erfassen des Bewegungstrends für jedes Warnelement basierend auf einer Bewegungshistorie. Die Bewegungshistorie ermöglicht es, für jedes Warnelement einen Bewegungstrend zu erfassen, indem beispielsweise eine aktuelle Position mit wenigstens einer vorherigen Position verglichen wird. Dabei kann die Historie beispielsweise vorherigen Positionen des Warnelements umfassen. Alternativ oder zusätzlich kann die Historie vorherige Bewegungstrends umfassen. Auch kann die Historie verhindern, dass bei einer fehlerhaften Erfassung eines Warnelements dessen Bewegungstrend sich beispielsweise unmittelbar von Annähernd auf Entfernend geändert wird, ohne zwischendurch auf beispielsweise Konstant zu wechseln.

In vorteilhafter Ausgestaltung der Erfindung umfasst der Schritt des Erfassens des Bewegungstrends für jedes Warnelement basierend auf einer Bewegungshistorie ein Initialisieren der Bewegungshistorie eines neu erfassten Warnelements. Durch das Initialisieren kann das Warnelement bereits unmittelbar nach der Initialisierung für die Bestimmung des Bewegungstrends verwendet werden. Die Initialisierung ist üblicherweise so gewählt, dass sich keine unvorhersehbaren Risiken ergeben, weshalb im Zweifel für ein gerade initialisiertes Warnelement in dem Fahrassistenzsystem eine Warnung ausgegeben wird. Entsprechendes gilt für das Verfahren zur Ausgabe einer Warnung.

In vorteilhafter Ausgestaltung der Erfindung umfasst der Schritt des Initialisierens der Bewegungshistorie eines neu erfassten Warnelements ein Initialisieren der Bewegungshistorie des neu erfassten Warnelements abhängig von einer Position des Sektors des neu erfassten Warnelements bezogen auf eine Bewegungsachse des Umgebungssensors. Die Bewegungsachse ist beispielsweise eine Längsachse, die einer bevorzugten Bewegungsrichtung entspricht. In einem an einem Fahrzeug montierten Zustand entspricht die Bewegungsachse beispielsweise einer Längsachse des Fahrzeugs. Entsprechend können beispielsweise Sektoren, die einen vorderen oder einen hinteren Bereich in der Bewegungsrichtung des Fahrzeugs abdecken, anders initialisiert werden, als Sektoren, die einen seitlichen Bereich des Fahrzeugs abdecken.

In vorteilhafter Ausgestaltung der Erfindung umfasst das Verfahren ein Anbringen des Umgebungssensors an einem Fahrzeug, und der Schritt des Initialisierens der Bewegungshistorie eines neu erfassten Warnelements umfasst ein Initialisieren der Bewegungshistorie des neu erfassten Warnelements abhängig von einem Lenkwinkel des Fahrzeugs. Abhängig von dem Lenkwinkel können beispielsweise Warnelemente auf einer Seite des Fahrzeugs auf eine Weise initialisiert werden, und andere auf eine andere Weise. So können z.B. Warnelemente auf der Seite des Fahrzeugs, zu welcher sich das Fahrzeug ausgehend von dem aktuellen Lenkwinkel bewegen kann, mit Annähernd initialisiert werden, während Warnelemente auf der anderen Seite des Fahrzeugs mit Entfernend initialisiert werden. Auch können Warnelemente in einem vorderen Bereich bei beispielsweise einem besonders großen, aktuellen Lenkwinkel als unkritisch, d.h. ohne Gefahr einer Kollision, erkannt werden.

In vorteilhafter Ausgestaltung der Erfindung umfasst der Schritt des Initialisierens der Bewegungshistorie eines neu erfassten Warnelements ein Initialisieren der Bewegungshistorie des neu erfassten Warnelements unter Berücksichtigung einer Relativgeschwindigkeit des neu erfassten Warnelements bezogen auf den Umgebungssensor. Wenn also bereits initial festgestellt werden kann, ob sich ein Warnelement annähert oder nicht, kann eine entsprechende Initialisierung gewählt werden.

In vorteilhafter Ausgestaltung der Erfindung umfasst das Verfahren ein Überprüfen eines Randbereichs eines Sektors auf Warnelemente und ein Bereitstellen eines Nachverfolgungsfeldes zum Erfassen der Bewegungshistorie für jedes Warnelement in dem Randbereich des Sektors. Somit können Warnelemente auch über Sektorgrenzen hinweg nachverfolgt werden. Entsprechend können Warnelemente mit ihrer Historie und/oder ihrem Bewegungstrend zur Bestimmung des Bewegungstrends des jeweiligen Sektors beitragen, auch wenn sie beispielsweise ein erstes Mal in einem Sektor erfasst werden. Die Nachverfolgung über Sektorgrenzen verbessert die Bestimmung des Bewegungstrends. Im Gegensatz zu Verfahren, bei denen jedes Warnelement mit einem Nachverfolgungsfeld betrachtet wird, wird hier nur eine deutlich geringe Anzahl Warnelemente in einem Nachverfolgungsfeld behandelt, so dass nur ein geringer Rechenaufwand erforderlich ist.

In vorteilhafter Ausgestaltung der Erfindung umfasst der Schritt des Ausgebens einer Warnung ein Ausgeben der Warnung für jeden Sektor abhängig von einem Abstand des Objekts in dem entsprechenden Sektor und dem Bewegungstrend in dem entsprechenden Sektor. So kann nicht nur der Bewegungstrend selber die Ausgabe einer Warnung beeinflussen, sondern auch eine zusätzliche Entfernung des Objekts. Dies gilt insbesondere, wenn der Bewegungstrend eine Geschwindigkeit enthält. Damit kann bei weiter entfernten Objekten und einer Annäherung mit nur einer geringen Geschwindigkeit eine Warnung entfallen.

In vorteilhafter Ausgestaltung der Erfindung umfasst der Schritt des Ausgebens einer Warnung ein Ausgeben einer akustischen und/oder einer optischen Warnung. Verschiedene Arten der Warnung sind prinzipiell bekannt. Eine akustische Warnung kann beispielsweise durch sich in der Abfolge ändernde Piep-Töne erfolgen, während eine optische Warnung beispielsweise auf einem Bildschirm in dem Fahrzeug ausgegeben werden kann. Entsprechend kann für jeden Sektor ein nächstgelegenes Objekt angezeigt werden.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragebar von einem Ausführungsbeispiel auf ein anderes.

Es zeigt
- Fig. 1: eine schematische Darstellung eines Fahrzeugs mit einem Fahrassistenzsystem mit einem Umgebungssensor gemäß einer ersten, bevorzugten Ausführungsform, wobei ein Winkelbereich des Umgebungssensors in eine Mehrzahl Sektoren eingeteilt ist, mit einem Warnelement zu zwei verschiedenen Zeitpunkten in Draufsicht,
- Fig. 2: eine schematische Darstellung des Fahrzeugs aus Fig. 1 mit einem Warnelement zu zwei verschiedenen Zeitpunkten, wobei das Warnelement in einem Nachverfolgungsfeld positioniert ist, in Draufsicht,
- Fig. 3: eine schematische Darstellung eines Fahrzeugs mit vier Zonen zur Initialisierung einer Bewegungshistorie,
- Fig. 4: ein Zustandsdiagram zur Darstellung von Übergängen zwischen Bewegungstrends, und
- Fig. 5: ein Ablaufdiagramm eines Verfahrens zur Ausgabe einer Warnung bei einer Annäherung an wenigstens ein Objekt mit einem Verfahren zur Bestimmung eines Bewegungstrends von Objekten in Übereinstimmung mit dem Fahrzeug und dem Fahrassistenzsystem der ersten Ausführungsform.

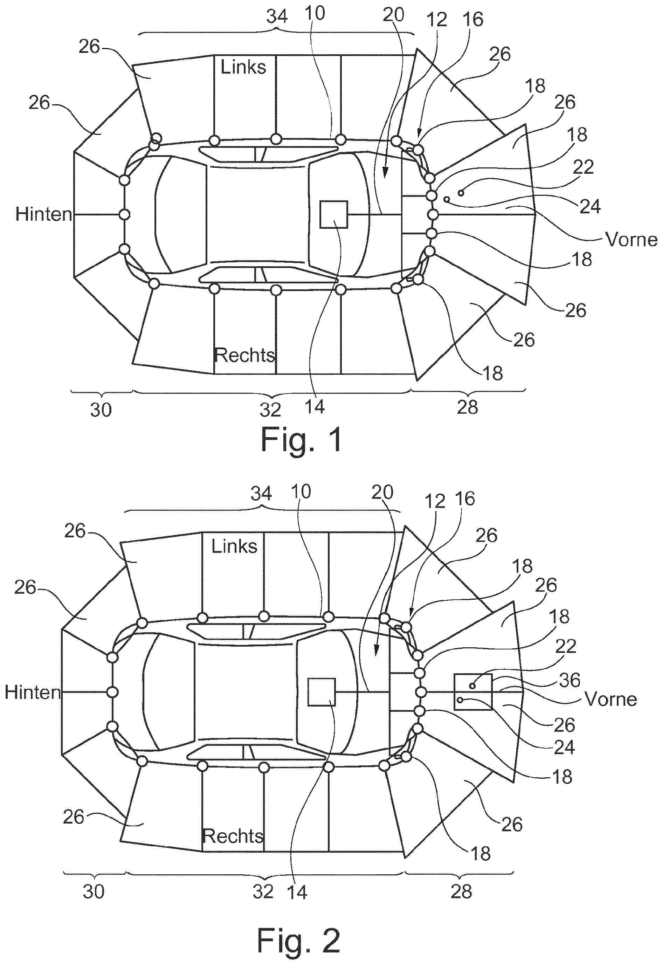

Die Figuren 1 und 2 zeigen ein Fahrzeug 10 gemäß einer ersten, bevorzugten Ausführungsform. Das Fahrzeug 10 umfasst ein Fahrassistenzsystem 12, welches nachfolgend im Detail beschrieben ist.

Das Fahrassistenzsystem 12 umfasst eine Steuerungseinheit 14 und einen Umgebungssensor 16. Der Umgebungssensor 16 ist hier als Ultraschallsensoreinheit mit einer Mehrzahl Einzelsensoren 18 ausgeführt, die rings um das Fahrzeug 10 angeordnet sind. In den Figuren sind nur die Einzelsensoren 18 an einer Vorderseite des Fahrzeugs explizit dargestellt. Gleichwohl deckt der Umgebungssensor 16 mit seinen Einzelsensoren 18 einem Winkelbereich von 360°um das Fahrzeug 10 ab.

Die Steuerungseinheit 14 und der Umgebungssensor 16 sind über einen Datenbus 20 miteinander verbunden, d.h. die Steuerungseinheit 14 ist über den Datenbus 20 mit jedem der Einzelsensoren 18 verbunden.

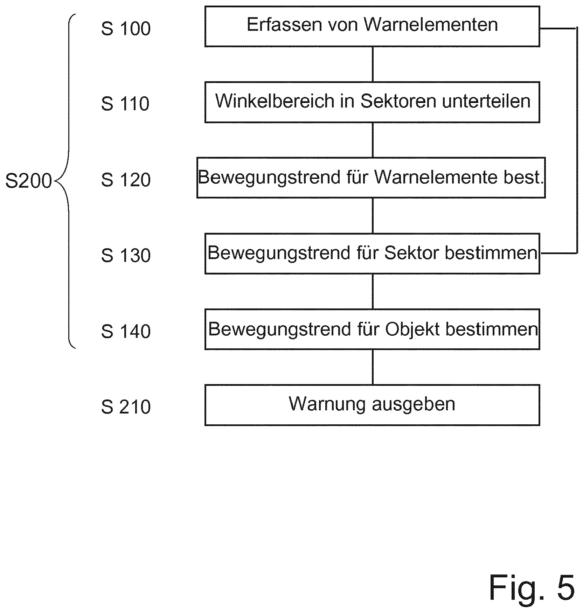

Das Fahrassistenzsystem 12 ist hier als Einparkhilfe ausgeführt. Entsprechend ist die Steuerungseinheit 14 ausgeführt, ein Verfahren zur Ausgabe einer Warnung bei einer Annäherung an wenigstens ein Objekt durchzuführen, das auf einem Verfahren zur Bestimmung eines Bewegungstrends von Objekten basiert. Die Verfahren sind nachstehend unter Bezug auf Fig. 5 beschrieben. Die Verfahren erfolgen in Übereinstimmung mit dem Fahrzeug 10 und dem Fahrassistenzsystem 12 der ersten Ausführungsform.

Das Verfahren zur Ausgabe einer Warnung bei einer Annäherung an wenigstens ein Objekt beginnt in Schritt S200 mit dem Verfahren zur Bestimmung eines Bewegungstrends von Objekten mit dem Umgebungssensor 16, welches nachstehend mit dem Schritten S100 bis S150 beschrieben ist. Zusätzlich umfasst das Verfahren Ausgabe einer Warnung bei einer Annäherung an wenigstens ein Objekt den Schritt S210. Die beiden Verfahren sind im Wesentlichen unter Bezug auf eine Vorderseite des Fahrzeugs 10 beschrieben, wobei sich die Lehren entsprechend auf alle anderen Seiten des Fahrzeug 10 anwenden lassen.

Das Verfahren zur Bestimmung eines Bewegungstrends von Objekten beginnt in Schritt S100 mit dem Erfassen von Warnelementen 22, 24 mit dem Umgebungssensor 16 in dem Winkelbereich, der von dem Umgebungssensor 16 abgedeckt wird. Wie in den Figuren 1 und 2 dargestellt ist, können sich die Warnelemente 22, 24 relativ zu dem Umgebungssensor 16 bewegen, sodass ein aktuelles Warnelement 22 zu einem aktuellen Erfassungszeitpunkt eine andere Position hat, als ein vorhergehend erfasstes Warnelement 24 zu einem vorhergehenden Erfassungszeitpunkt.

Um die Warnelemente 22, 24 zu erfassen, werden zunächst mit dem Umgebungssensor 16 Erkennungselemente in dem Winkelbereich erfasst. Anschließend werden die Warnelemente 22, 24 aus den Erkennungselementen herausgefiltert. Das Herausfiltern der Erkennungselemente betrifft in diesem Ausführungsbeispiel ein Filtern abhängig von einer erkannten Relevanz eines Erkennungselements. Die Relevanz kann auf prinzipiell verschiedene Arten bestimmt werden. Dabei wird eine Hysteresefunktion angewendet, durch welche relevante Erkennungselemente als Warnelemente 22, 24 erfasst werden.

In Schritt S110 wird der Winkelbereich in eine Mehrzahl Sektoren 26 unterteilt. Jeder Sektor 26 umfasst einen Teil des Winkelbereichs des Umgebungssensors 16. Die Sektoren 26 sind abhängig von ihrer Position an dem Fahrzeug 10 unterschiedlich angeordnet. In einem vorderen Bereich 28 und in einem hinteren Bereich 30 sind die Sektoren 26 im Wesentlichen kreisscheibensektorförmig ausgeführt. In einem rechten Bereich 32 und einem linken Bereich 34 sind die Sektoren 26 im Wesentlichen rechteckig ausgeführt und nebeneinander angeordnet. Zusammen decken die Sektoren 26 den gesamten Winkelbereich ab.

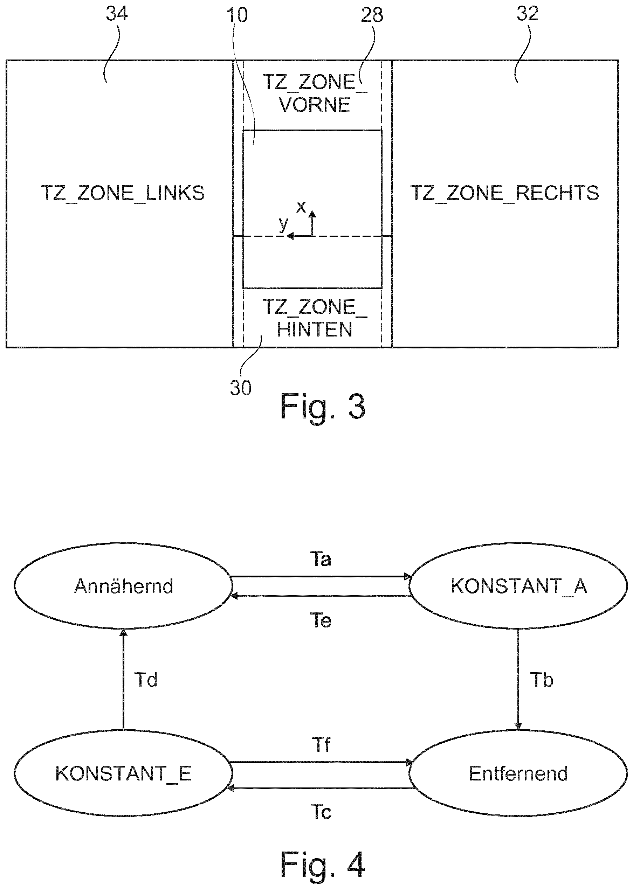

In einem Schritt S120 wird ein Bewegungstrend für jedes Warnelement 22, 24 erfasst. Dazu wird basierend auf einer Bewegungshistorie des Warnelements 22, 24 der Bewegungstrend bestimmt. Entsprechend wird für das aktuelle Warnelement 22 dessen vorherige Position bestimmt, d.h. die Position des vorhergehenden Warnelements 24, und der Bewegungstrend bestimmt, wie in Fig. 1 dargestellt ist. Der Bewegungstrend wird bestimmt zu Annähernd, Konstant nach Annähernd, Entfernend oder Konstant nach Entfernend. Mögliche sich ergebende Übergänge sind in Fig. 4 nach der Art eines Zustandsdiagramms dargestellt. Dabei sind die Änderungen Ta, Tc dadurch gekennzeichnet, dass der Abstand zu dem aktuellen Warnelement 22 und dem vorhergehend erfassten Warnelement 24 gleich ist. Die Änderungen Td, Te betreffen Übergänge, wobei der Abstand zu dem vorhergehend erfassten Warnelement 24 größer als der Abstand zu dem aktuellen Warnelement 22 ist. Die Änderungen Tb, Tf betreffen Übergänge, wobei der Abstand zu dem vorhergehend erfassten Warnelement 24 kleiner als der Abstand zu dem aktuellen Warnelement 22 ist.

In einer alternativen Ausführungsform wird der Bewegungstrend als eine Kombination aus Bewegungsrichtung und Bewegungsgeschwindigkeit erfasst.

Dabei wird überprüft, ob sich aktuelle Warnelemente 22 in einem Randbereich eines Sektors 26 befinden, wie in Fig. 2 dargestellt ist. Entsprechend wird ein Nachverfolgungsfeld 36 um das aktuelle Warnelement 22 positioniert. Dadurch kann das vorhergehende Warnelement 24 erfasst und dem aktuellen Warnelement 22 zugeordnet werden. Entsprechend kann die Bewegungshistorie des aktuellen Warnelements 22 basierend auf dem vorherigen Warnelement 24 bestimmt werden, auch wenn sich das vorherige Warnelement 24 in einem anderen Sektor 26 befunden hat als das aktuelle Warnelement 22.

Für neu erfasste Warnelemente 22, 24 wird die Bewegungshistorie wie nachstehend im Detail erläutert initialisiert. Das Initialisieren der Bewegungshistorie der neu erfassten Warnelemente 22, 24 erfolgt abhängig von einer Position des Sektors 26 des neu erfassten Warnelements 22, 24 bezogen auf eine Längsachse des Umgebungssensors 16 und abhängig von einem Lenkwinkel des Fahrzeugs 10. Abhängig von dem Lenkwinkel werden Warnelemente auf Warnelemente 22, 24 auf der Seite des Fahrzeugs 10, zu welcher sich das Fahrzeug 10 bewegen wird, mit Konstant nach Annähernd initialisiert werden, während Warnelemente 22, 24 auf der anderen Seite des Fahrzeugs 10 mit Konstant nach Entfernend initialisiert werden.

Auch die Sektoren 26 in dem vorderen Bereich 28 und dem hinteren Bereich 30 des Fahrzeugs 10 werden initialisiert. Dazu werden diese Sektoren 26 bzw. die neu erfassten Warnelemente 22, 24 in diesen Sektoren 26 unter Berücksichtigung einer Relativgeschwindigkeit des jeweiligen neu erfassten Warnelements 22, 24 bezogen auf den Umgebungssensor 16 initialisiert. Hierzu können beispielsweise odometrische Daten des Fahrzeugs 10 verwendet werden, die von dem Fahrzeug selber gewonnen werden.

Nachfolgend wird in Schritt S130 ein Bewegungstrend für jeden Sektor 26 basierend auf dem Bewegungstrend der erfassten Warnelemente 22, 24 in dem jeweiligen Sektor 26 bestimmt. Es kann beispielsweise eine Mittelwertbildung der Bewegungstrends der erfassten Warnelemente 22, 24 in dem jeweiligen Sektor 26 erfolgen. In alternativen Ausführungsformen können andere Verfahren zur Bestimmung eines Bewegungstrends aus einer Mehrzahl einzelner Bewegungstrends der Warnelemente 22, 24 angewendet werden, beispielsweise mit einer Gewichtung, mit einer Schwellwertbildung oder ähnlichem.

In Schritt S140 wird ein Bewegungstrend eines Objekts basierend auf der Position des Objekts in einem der Sektoren 26 bestimmt. Dazu wird das Objekt in einem der Sektoren 26 verortet, und der Bewegungstrend des entsprechenden Sektors 26 wird dem Objekt zugeordnet.

In Schritt S210 erfolgt ein Ausgeben einer Warnung abhängig von einem Abstand des Objekts und dem Bewegungstrend in dem entsprechenden Sektor 26. Die Warnung wird gleichzeitig als akustische und optische Warnung ausgegeben. Die akustische Warnung erfolgt durch sich in der Abfolge ändernde Piep-Töne, während die optische Warnung auf einem Bildschirm in dem Fahrzeug 10 ausgegeben werden wird für jeden Sektor 26.

**Bezugszeichenliste**

| | |
|---|---|
| Fahrzeug | 10 |
| Fahrassistenzsystem | 12 |
| Steuerungseinheit | 14 |
| Umgebungssensor, Ultraschallsensor | 16 |
| Einzelsensor | 18 |
| Datenbus | 20 |
| Warnelement, aktuell | 22 |
| Warnelement, vorhergehend | 24 |
| Sektor | 26 |
| vorderer Bereich | 28 |
| hinterer Bereich | 30 |
| rechter Bereich | 32 |
| linker Bereich | 34 |
| Nachverfolgungsfeld | 36 |

## Patentansprüche

1. Verfahren zur Bestimmung eines Bewegungstrends von Objekten mit einem Umgebungssensor (16) in einem Winkelbereich, umfassend ein Erfassen von Warnelementen (22, 24) mit dem Umgebungssensor (16) in dem Winkelbereich, **gekennzeichnet durch** die Schritte
Unterteilen des Winkelbereichs in eine Mehrzahl Sektoren (26),
Erfassen eines Bewegungstrends für jedes erfasste Warnelement (22, 24), Bestimmen eines Bewegungstrends für jeden Sektor (26) basierend auf dem Bewegungstrend der erfassten Warnelemente (22, 24) in dem Sektor (26), und Bestimmen eines Bewegungstrends eines Objekts basierend auf der Position des Objekts in einem der Sektoren (26).

2. Verfahren nach Anspruch 1, **dadurch gekennzeichnet, dass**
der Schritt des Erfassens von Warnelementen (22, 24) mit dem Umgebungssensor (16) ein Erkennen von Erkennungselementen mit dem Umgebungssensor (16) in dem Winkelbereich und ein Herausfiltern der Warnelemente (22, 24) aus den Erkennungselementen umfasst.

3. Verfahren nach einem der vorhergehenden Ansprüche 1 oder 2, **dadurch gekennzeichnet, dass**
der Schritt des Erfassens eines Bewegungstrends für jedes Warnelement (22, 24) ein Erfassen des Bewegungstrends für jedes Warnelement (22, 24) basierend auf einer Bewegungshistorie umfasst.

4. Verfahren nach Anspruch 3, **dadurch gekennzeichnet, dass**
der Schritt des Erfassens des Bewegungstrends für jedes Warnelement (22, 24) basierend auf einer Bewegungshistorie ein Initialisieren der Bewegungshistorie eines neu erfassten Warnelements (22, 24) umfasst.

5. Verfahren nach Anspruch 4, **dadurch gekennzeichnet, dass**
der Schritt des Initialisierens der Bewegungshistorie eines neu erfassten Warnelements (22, 24) ein Initialisieren der Bewegungshistorie des neu erfassten Warnelements (22, 24) abhängig von einer Position des Sektors (26) des neu erfassten Warnelements (22, 24) bezogen auf eine Bewegungsachse des Umgebungssensors (16) umfasst.

6. Verfahren nach einem der vorhergehenden Ansprüche 4 oder 5, **dadurch gekennzeichnet, dass**
das Verfahren ein Anbringen des Umgebungssensors (16) an einem Fahrzeug (10) umfasst, und
der Schritt des Initialisierens der Bewegungshistorie eines neu erfassten Warnelements (22, 24) ein Initialisieren der Bewegungshistorie des neu erfassten Warnelements (22, 24) abhängig von einem Lenkwinkel des Fahrzeugs (10) umfasst.

7. Verfahren nach einem der vorhergehenden Ansprüche 4 bis 6, **dadurch gekennzeichnet, dass**
der Schritt des Initialisierens der Bewegungshistorie eines neu erfassten Warnelements (22, 24) ein Initialisieren der Bewegungshistorie des neu erfassten Warnelements (22, 24) unter Berücksichtigung einer Relativgeschwindigkeit des neu erfassten Warnelements (22, 24) bezogen auf den Umgebungssensor (16) umfasst.

8. Verfahren nach einem der vorhergehenden Ansprüche, **dadurch gekennzeichnet, dass**
das Verfahren ein Überprüfen eines Randbereichs eines Sektors (26) auf Warnelemente (22, 24) und
ein Bereitstellen eines Nachverfolgungsfeldes () zum Erfassen der Bewegungshistorie für jedes Warnelement (22, 24) in dem Randbereich des Sektors (26) umfasst.

9. Verfahren zur Ausgabe einer Warnung bei einer Annäherung an wenigstens ein Objekt,
**gekennzeichnet durch** die Schritte
Bestimmung eines Bewegungstrends von Objekten nach einem der Ansprüche 1 bis 8, und
Ausgeben einer Warnung abhängig von einem Abstand des Objekts und dem Bewegungstrend in dem entsprechenden Sektor (26).

10. Verfahren nach Anspruch 9, **dadurch gekennzeichnet, dass**
der Schritt des Ausgebens einer Warnung ein Ausgeben der Warnung für jeden Sektor (26) abhängig von einem Abstand des Objekts in dem entsprechenden Sektor (26) und dem Bewegungstrend in dem entsprechenden Sektor (26) umfasst.

11. Verfahren nach einem der vorhergehenden Ansprüche 9 oder 10, **dadurch gekennzeichnet, dass**
der Schritt des Ausgebens einer Warnung ein Ausgeben einer akustischen und/oder einer optischen Warnung umfasst.

12. Fahrassistenzsystem (12) für ein Fahrzeug (10) mit
einer Steuerungseinheit (14) und einem Umgebungssensor (16),
**dadurch gekennzeichnet, dass**
das Fahrassistenzsystem (12) ausgeführt ist, das Verfahren nach einem der Ansprüche 1 bis 11 durchzuführen.

13. Fahrassistenzsystem (12) nach dem vorhergehenden Anspruch 12, **dadurch gekennzeichnet, dass**
der Umgebungssensor (16) wenigstens einen Ultraschallsensor, ein Lidar, einen Laserscanner, ein Radar, oder eine Kamera aufweist.

14. Fahrzeug (10) mit einem Fahrassistenzsystem (12) nach einem der vorhergehenden Ansprüche 12 oder 13.
